# FASCICULE DE BREVET EUROPEEN

(11) **EP 0 354 071 B1**
(45) Date de publication et mention de la délivrance du brevet: **17.08.1994**
(21) Numéro de dépôt: 89401524.7
(22) Date de dépôt: 02.06.1989
(51) Int. Cl.: C08J 7/04, C08L 27/16, B05D 7/02, C08J 5/12

(54) **Procédé de traitement de surface d'un matériau de polyfluorure de vinylidène pour permettre son adhérence a un polymère non compatible**
Verfahren zur Oberflächenbehandlung von Polyvinylidenfluoridmaterialien, um die Adhäsion an unverträgliche Polymere zu verbessern
Process for the surface treatment of polyvinylidene fluoride materials for improving adhesion to incompatible polymers

(30) Priorité: 09.06.1988 FR 8807696
(43) Date de publication de la demande: 07.02.1990
(73) Titulaire: ELF ATOCHEM S.A., 92800 Puteaux (FR)
(72) Inventeur: Duperray, Gilbert, F-69380 Civrieux D'Azergues (FR); Wolff, Daniel, F-69006 Lyon (FR)
(74) Mandataire: Foiret, Claude Serge

(56) Documents cités:
- FR-A- 2 307 633
- FR-A- 2 346 426
- GB-A- 991 909
- WPI/DERWENT, résumé no. 78-59301A(33), Derwent Publications, Ltd, Londres, GB;& JP-A-53 078 238
- CHEMICAL ABSTRACTS, vol. 89, no. 20, 13 juillet 1978, pages 58-59, résumé no.164757r, Columbus, Ohio, US; & JP-A-78 82 884

## Description

La présente invention concerne un matériau de polyfluorure de vinylidène (PVDF) dont au moins une des surfaces est revêtue de fines particules de PVDF. L'invention concerne également le procédé de traitement d'une surface de PVDF consistant à la revêtir de particules de PVDF en vue de faciliter l'adhésion ultérieure d'un polymère non compatible avec le PVDF sur ladite surface. Le procédé consiste à fixer sur la surface de PVDF des particules de PVDF.

Le PVDF est connu pour sa résistance aux agents chimiques et sa tenue aux facteurs atmosphériques. Ces propriétés en ont fait un matériau particulièrement adapté comme revêtement de protection de matériaux résistants mécaniquement mais sensibles à la corrosion chimique ou atmosphérique. C'est ainsi, par exemple, que s'est développé en chaudronnerie plastique l'usage du PVDF comme couche de protection des résines thermodurcissables.

Par contre les propriétés anti-adhérentes du PVDF rendent sa mise en oeuvre complexe. Depuis quelques années des moyens ont été développés pour permettre son adhésion à des tiers corps, et en particulier aux résines plastiques : directement sous forme de couches de finition ou de primaire d'adhérence. Le primaire plastique d'adhérence est particulièrement utilisé comme intermédiaire pour le revêtement de pièce métallique par du PVDF.

Selon le FR-A-2 346 426 il est proposé, afin de rendre une surface de PVDF adhérente à une surface quelconque, de fixer sur la surface de PVDF un substrat fibreux au moyen d'une dissolution de polymère non fluoré dans un solvant polaire aprotique.

Selon le brevet des Etats-Unis d'Amérique US-A-3 723 234 et le DE-A-2 818 385 il est proposé d'imprégner, à chaud sous pression, la surface de PVDF de fibres ou de tissu afin de créer une surface d'accrochage pour d'autres polymères.

Ces techniques utilisées industriellement présentent l'inconvénient d'associer au composite final PVDF-polymère un intermédiaire étranger sous forme de fibres ou de tissu, ce qui n'est pas toujours un avantage. Par exemple au niveau de la mise en oeuvre de ces composites, il est nécessaire préalablement à toute opération de soudure de retirer le substrat fibreux sur une certaine largeur le long des lignes de soudure. Cette opération présente, entre autres, l'inconvénient de générer le long des lignes de soudure des zones de non adhérence ou pour le moins des zones d'amorce de décollement et de corrosion.

Une autre technique connue consiste à faire adhérer au PVDF, au moyen d'une dissolution du PVDF dans un solvant des grains de substance minérale comme l'alumine ou la silice. Là encore il y a interposition entre le PVDF et le substrat à faire adhérer d'un intermédiaire étranger nuisible comme précédemment et en particulier au niveau des jonctions.

La présente invention concerne un matériau en PVDF dont au moins une surface, essentiellement de PVDF, est adaptée pour l'adhésion d'un polymère non compatible.

Comme il a été vu, il n'est pas possible de faire adhérer à une surface de PVDF un polymère plastique non compatible, que ce soit directement à chaud ou sous forme de primaire en solution, sans passer par un intermédiaire étranger au deux matériaux à faire adhérer.

Le matériau de PVDF selon l'invention est caractérisé en ce qu'il possède au moins une surface revêtue de poudre de PVDF. Cette poudre dispersée et fixée à la surface du matériau crée une couche poreuse d'adhérence permettant au polymère non compatible à faire adhérer de s'accrocher tel quel, à chaud ou sous forme réticulable, ou bien en solution dans un solvant.

Cette couche poreuse est constituée de particules élémentaires de PVDF de granulométrie moyenne de préférence supérieure à 50 µm et de préférence inférieure à 300 µm. Afin de former une couche poreuse la plus efficace possible il est recommandé que la couche de particules de PVDF possède le moins possible de particules inférieures à 30 µm. L'empilement en vrac et non ordonné des particules sur la surface du matériau de PVDF doit être suffisamment épais pour constituer une couche poreuse assurant l'accrochage du polymère non compatible à faire adhérer. L'épaisseur recommandée d'empilement des particules est compris entre 200 et 1000 µm, et de préférence voisine de 500 µm.

Les poudres de PVDF susceptibles de revêtir la surface du matériau de PVDF sont habituellement quelconques. Ce sont par exemple les particules obtenues directement par séchage d'un latex résultant de la polymérisation en émulsion ou en suspension de fluorure de vinylidène. Toutefois il est préférable d'utiliser une poudre de PVDF ayant déjà été fondu de façon à ce que les particules possèdent une cohésion suffisante. De plus, la structure des particules de PVDF est de préférence irrégulière de façon à créer une porosité suffisante de la couche d'adhérence. Ainsi tout en présentant une granulométrie la plus homogène possible la poudre de PVDF est constituée de préférence de grains de formes très diverses. Une telle poudre est par exemple obtenue par broyage cryogénique de granulés de PVDF.

La surface du matériau de PVDF revêtue de particules de PVDF présente une rugosité sensible au toucher. Il a été constaté que cette rugosité doit être obtenue par fixation des particules sur la surface du matériau. Il est en effet possible de rendre rugueuse une surface de PVDF par traitement mécanique en la râpant par exemple, ou par traitechimique provoquant des irrégularités ; curieusement ces types de traitements de surface se sont révélés médiocrement efficaces dans l'amélioration des propriétés d'adhérence du PVDF.

Le procédé selon l'invention de traitement de surface d'un matériau de PVDF pour le rendre adhérent à un polymère non compatible consiste à fixer sur ladite surface, de façon dispersée et en vrac, des particules de PVDF. Ce traitement confère à la surface de PVDF une rugosité et provoque la formation d'un réseau de pores qui va permettre l'accrochage au matériau de PVDF du polymère non compatible.

Les particules de PVDF dont la granulométrie moyenne est supérieure à 50 µm peuvent être fixées par tous moyens sur la surface du matériau de PVDF par traitement thermique à une température d'au moins 130°C. Un des moyens préférés consiste à projeter à travers une flamme de chalumeau du PVDF pulvérulent sur une surface de PVDF de préférence préalablement chauffée. Les particules partiellement fondues en surface viennent se souder les unes aux autres sur la surface à traiter du matériau de PVDF. Un autre moyen consiste a enduire la surface à traiter du matériau de PVDF d'un solvant à chaud du PVDF puis à pulvériser les particules de PVDF avant d'éliminer le solvant à une température comprise de préférence entre 130 et 165°C. Afin d'éviter, dans cette dernière technique, une évaporation trop rapide du solvant, il est préférable de lui substituer une solution, de préférence de 1 à 20 % en poids, de PVDF dans le solvant à chaud. Comme précédemment la surface à traiter est enduite de solution avant la projection des particules de PVDF. Afin d'augmenter l'épaisseur de la couche d'accrochage, il est possible de renouveler au moins une fois l'ensemble des opérations après le premier traitement de surface du matériau de PVDF.

Une autre technique préférée consiste à fabriquer, au moyen des particules de PVDF une nappe poreuse formée de grains de poudre liés entre eux. Cette nappe est ensuite fixée sur une surface d'une pièce, telle que plaque ou feuille, en PVDF, la fixation se faisant par tout moyen connu par exemple par collage au moyen d'un solvant du PVDF ou mieux par laminage à chaud.

De façon plus détaillée la nappe poreuse peut être préparée par déposition, comme par exemple par saupoudrage, de poudre sur un support inerte et de préférence métallique. L'ensemble est porté à une température supérieure au point de fusion du PVDF pendant une durée suffisante pour permettre la liaison interfaciale des particules de poudre. En général la poudre est portée à une température de 180 à 200°C pendant 30 secondes à 5 minutes.

Dans ces conditions on obtient une nappe de PVDF fritté présentant une texture poreuse. L'épaisseur de cette nappe est en général comprise entre 0,4 et 1 mm.

Une fois récupérée cette nappe est fixée sur une surface de PVDF. La fixation peut se faire par simple collage, mais il est préférable de fixer cette nappe sur une plaque ou feuille de PVDF en sortie d'extrudeuse. Par exemple, en sortie d'extrusion d'une plaque ou feuille de PVDF se trouvant encore, aux lèvres de la filière, à l'état pratiquement fondu en surface, on applique sur une des surfaces la nappe que l'on fixe par pression, par exemple par calandrage, avant refroidissement de la plaque ou feuille de PVDF. La nappe est fixée de préférence à une température de la feuille ou de la plaque comprise entre 200 et 230°C. Il y a ainsi liaison intime entre la nappe et la paraison de PVDF.

Les particules de PVDF servant au revêtement de la surface du matériau de PVDF sont de préférence des homopolymères de PVDF, ou encore des copolymères contenant au moins 50 % molaire d'unités dérivées de fluorure de vinylidène.

Le matériau de PVDF traité selon l'invention possède un haut degré d'adhésion avec les polymères non compatibles avec le PVDF. C'est ainsi que sans intermédiaire étranger entre le PVDF et le polymère il est possible de faire directement réticuler le polymère non compatible, tel les résines thermodurcissables comme le polyester, sur la surface de particules de PVDF. Il est encore possible de faire adhérer sous pression à chaud un polymère thermoplastique non compatible directement par contact avec la surface de particules de PVDF. Enfin il n'est pas exclu de coller directement au moyen d'une solution de polymère dans un solvant un polymère non compatible sur la surface traitée du matériau de PVDF.

Les exemples suivants illustrent l'invention sans la limiter.

### EXEMPLE 1

Sur une plaque extrudée en PVDF préchauffée à 40°C on applique au moyen d'un pinceau une dissolution à 10 % en poids de PVDF dans la diméthylformamide. On projette sur la surface enduite une poudre de PVDF de granulométrie moyenne de 90 µm. L'ensemble est porté à 133°C et maintenu à cette température pendant 5 minutes de façon à évaporer le solvant. On procède ensuite, au moyen d'un chalumeau à une opération de flammage sur la surface traitée de façon à fondre en surface, les graines de poudre de PVDF sans détruire la strucutre poreuse de la surface d'accrochage. Après refroidissement on obtient une plaque de PVDF possédant une surface revêtue d'une couche poreuse de PVDF d'épaisseur de 270 µm.

Sur la surface traitée on fait couler une résine polyester puis on applique des couches successives de mat de verre et de polyester. Après réticulation on obtient un stratifié polyester revêtu de PVDF.

Les mesures d'adhérence ont donné les résultats suivants :
résistance au cisaillement de 6,9 N/mm² à température ambiante et de 5,3 N/mm² à 80°C.

### EXEMPLE 2

Sur une plaque extrudée en PVDF préchauffée à 50°C, on pulvérise au moyen d'un pistolet une dissolution à 5 % en poids de PVDF dans de la diméthylformamide. On projette sur la surface ainsi enduite une poudre de PVDF identique à celle de l'Exemple 1. On effectue alors un flammage direct, sans traitement thermique préalable, qui fait s'enflammer la diméthylformamide. Après refroidissement on obtient une plaque de PVDF revêtue d'une couche poreuse de PVDF. On effectue sur cette surface d'accrochage un traitement Corona, puis on colle la plaque ainsi obtenue sur une plaque d'acier sablée au moyen d'un adhésif epoxyde réticulable (AW 138, de CIBA GElGY).

Cette structure soumise à une mesure de résistance au cisaillement donne un résultat de 6,4 N/mm² à la température ambiante.

### EXEMPLE 3

Sur une plaque de PVDF moulée par compression à 230°C on projette une poudre de PVDF identique à celle de l'Exemple 1 préalablement chauffée à 160°C. La température de la plaque au moment du saupoudrage est à peine inférieure à 230°C. Le surplus de poudre est évacué à l'air comprimé. On laisse l'ensemble refroidir à la température ambiante. On colle ensuite l'ensemble sur une plaque acier comme dans l'exemple 2 et l'on obtient une résistance au cisaillement de 4,5 N/mm² à la température ambiante.

### EXEMPLE 4

Sur une plaque inox on pulvérise une dissolution à 5 % en poids de copolymère VF₂-C₂F₃Cl ; on projette alors une poudre PVDF identique à celle de l'Exemple 1.

L'ensemble est placé dans un four à 150°C pendant 1min30s pour évacuer le solvant, puis dans un four à 200°C pendant 1min30s pour fondre en surface les grains de la poudre PVDF. Après refroidissement on obtient une nappe souple de PVDF poreuse d'environ 600 microns d'épaisseur. Cette nappe est ensuite placée sur une plaque PVDF à 210°C après avoir été préchauffée à 160°C.

Après refroidissement de l'ensemble on réalise un frettage polyester comme dans l'Exemple 1 ; la résistance au cisaillement obtenue est de 3,2 N/mm² à température ambiante.

## Revendications

1. Matériau en polyfluorure de vinylidène traité en surface par du polyfluorure de vinylidène en poudre de façon à améliorer son adhérence à un polymère non compatible caractérisé en ce que la poudre de polyfluorure de vinylidène, dont les particules élémentaires possèdent une granulométrie moyenne supérieure à 50 micromètres adhérant à au moins une des surfaces dudit matériau constitue une couche poreuse exempte d'intermédiaire étranger de liaison.

2. Matériau selon la revendication 1 caractérisé en ce que la poudre fixée en surface constitue une couche poreuse d'épaisseur comprise entre 200 et 1000 micromètres (µm).

3. Matériau selon l'une des revendications 1 ou 2 caractérisé en ce que la poudre servant au revêtement de polyfluorure de vinylidène a été préalablement obtenu par broyage cryogénique de granulés de polufluorure de vinylidène.

4. Procédé de fabrication du matériau des revendications 1 à 3 consistant à fixer en vrac et de façon dispersée, afin de former une couche poreuse, des particules de polyfluorure de vinylidène, dont la granulométrie moyenne est supérieure à 50 µm, sur une surface d'un matériau de polyfluorure de vinylidène par traitement thermique à une température d'au moins 130 °C.

5. Procédé selon la revendication 4 caractérisé en ce que l'on projette sur la surface d'un matériau de polyfluorure de vinylidène, de préférence préalablement chauffé à travers la flamme d'un chalumeau, du polyfluorure de vinylidène pulvérulent.

6. Procédé selon la revendication 5 caractérisé en ce qu'après avoir enduit la surface d'un matériau de polyfluorure de vinylidène d'un solvant à chaud ou d'une solution de polyfluorure de vinylidène dans un solvant à chaud, on pulvérise des particules de polyfluorure de vinylidène avant de maintenir l'ensemble à une température comprise en 130 et 165 °C.

7. Procédé de fabrication selon la revendication 4 caractérisé en ce que l'on fabrique préalablement une nappe poreuse formée de grains de poudre de polyfluorure de vinylidène liés entre eux et qu'on le fixe à la surface d'une pièce en polyfluorure de vinylidène.

8. Procédé selon la revendication 7 caractérisé en ce que la nappe est fixée sur la pièce par collage au moyen d'un solvant de polyfluorure de vinylidène.

9. Procédé selon la revendication 8 caractérisé en ce qu'on fixe par pression la nappe sur une surface de polyfluorure de vinylidène à l'état pratiquement fondu en surface, et qu'on refroidit l'ensemble.

10. Procédé selon l'une des revendications 7 à 9 caractérisé en ce que la surface de polyfluorure de vinylidène est à une température comprise entre 200 et 230 °C.

11. Procédé selon l'une des revendications 7 à 10 caractérisé en ce que la nappe est préparée par saupoudrage de poudre de polyfluorure de vinylidène sur un support inerte, l'ensemble étant porté à une température permettant la liaison interfaciale des particules de poudre.

12. Procédé selon la revendication 11 caractérisé en ce que la poudre est portée à une température de 180 à 200 °C pendant 30 secondes à 5 minutes.

13. Procédé selon l'une des revendications 11 ou 12 caractérisé en ce que l'épaisseur de la nappe est comprise entre 0,4 et 1 mm.

## Claims

1. Material made of poly(vinylidene fluoride) which has been surface treated with powdered poly(vinylidene fluoride) in order to improve its adhesion to a noncompatible polymer, characterized in that the poly(vinylidene fluoride) powder, the elementary particles of which have a mean particle size greater than 50 micrometres, adhering to at least one of the surfaces of the said material, constitutes a porous layer which is free from foreign bonding intermediates.

2. Material according to Claim 1, characterized in that the powder bound to the surface constitutes a porous layer of thickness between 200 and 1000 micrometers (µm).

3. Material according to either of Claims 1 and 2, characterized in that the powder serving as the poly(vinylidene fluoride) coating has been obtained beforehand by cryogenic grinding of poly(vinylidene fluoride) granules.

4. Process for the production of the material of Claims 1 to 3, consisting in binding loosely and in a dispersed fashion, in order to form a porous layer, poly(vinylidene fluoride) particles, the mean particle size of which is greater than 50 µm, to one surface of a poly(vinylidene fluoride) material by thermal treatment at a temperature of at least 130°C.

5. Process according to Claim 4, characterized in that powdered poly(vinylidene fluoride) is sprayed onto the surface of a poly(vinylidene fluoride) material which has preferably been heated beforehand in the flame of a blowtorch.

6. Process according to Claim 5, characterized in that after having covered the surface of a poly(vinylidene fluoride) material with a hot solvent or with a solution of poly(vinylidene fluoride) in a hot solvent, particles of poly(vinylidene fluoride) are sprayed onto it and the system is subsequently maintained at a temperature between 130 and 165°C.

7. Production process according to Claim 4, characterized in that a porous sheet made up of inter-linked grains of poly(vinylidene fluoride) powder is produced beforehand, and in that it is bound to the surface of a component made of poly(vinylidene fluoride).

8. Process according to Claim 7, characterized in that the sheet is bound to the component by sticking by means of a solvent for poly(vinylidene fluoride).

9. Process according to Claim 8, characterized in that the sheet is bound by pressure to one surface of poly(vinylidene fluoride) which is virtually molten at the surface, and in that the system is cooled.

10. Process according to one of Claims 7 to 9, characterized in that the poly(vinylidene fluoride) surface is at a temperature between 200 and 230°C.

11. Process according to one of Claims 7 to 10, characterized in that the sheet is prepared by dusting poly(vinylidene fluoride) powder onto an inert support, the system being brought to a temperature which permits interfacial bonding of the powder particles.

12. Process according to Claim 11, characterized in that the powder is brought to a temperature of 180 to 200°C for 30 seconds to 5 minutes.

13. Process according to either of Claims 11 and 12, characterized in that the thickness of the sheet is between 0.4 and 1 mm.

## Patentansprüche

1. Durch pulverförmiges Polyvinylidenfluorid oberflächenbehandeltes Polyvinylidenfluoridmaterial zur Verbesserung seiner Adhäsion auf einem unverträglichen Polymer, dadurch gekennzeichnet, daß das Polyvinylidenfluoridpulver, dessen Basisteilchen eine mittlere Korngrößenverteilung von größer 50 Mikrometer (µm) besitzen und auf mindestens einer der Oberflächen des genannten Materials haften, eine poröse Schicht ohne fremde Bindemittel bildet.

2. Material nach Anspruch 1, dadurch gekennzeichnet, daß das auf der Oberfläche haftende Pulver eine poröse Schicht mit einer Dicke zwischen 200 und 1000 Mikrometer (µm) bildet.

3. Material nach einem der Ansprüche 1 oder 2, dadurch gekennzeichnet, daß das für die Beschichtung von Polyvinylidenfluorid verwendete Pulver vorher durch Tieftemperaturzerkleinerung von Polyvinylidenfluoridgranulat erhalten wurde.

4. Verfahren zur Herstellung des Materials nach den Ansprüchen 1 bis 3, bestehend aus einer losen und verteilten Fixierung von Polyvinylidenfluroridteilchen mit einer mittleren Korngrößenverteilung von größer 50 Mikrometer (µm) auf einer Oberfläche eines Polyvinylidenfluoridmaterials, durch thermische Behandlung bei einer Temperatur von mindestens 130 °C, um eine poröse Schicht zu bilden.

5. Verfahren nach Anspruch 4, dadurch gekennzeichnet, daß man auf die Oberfläche eines vorzugsweise vorher durch eine Gasbrennerflamme erhizten Polyvinylidenfluoridmaterials pulverförmiges Polyvinylidenfluorid sprüht.

6. Verfahren nach Anspruch 5, dadurch gekennzeichnet, daß man nach der Beschichtung der Oberfläche eines Polyvinylidenfluoridmaterials mit einem heißen Lösemittel oder einer Lösung von Polyvinylidenfluorid in einem heißen Lösemittel die Polyvinylidenfluoridteilchen versprüht, bevor man das Ganze bei einer Temperatur zwischen 130 und 165 °C beibehält.

7. Herstellungsverfahren nach Anspruch 4, dadurch gekennzeichnet, daß man vorher eine poröse Schicht herstellt, die aus untereinander verbundenen Polyvinylidenfluoridpulverkörnchen besteht, und die man auf der Oberfläche eines Polyvinylidenfluoridteils fixiert.

8. Verfahren nach Anspruch 7, dadurch gekennzeichnet, daß die Schicht auf dem Teil durch Kleben mittels eines Polyvinylidenfluoridlösemittels fixiert wird.

9. Verfahren nach Anspruch 8, dadurch gekennzeichnet, daß man die Schicht auf einer Polyvinylidenfluoridoberfläche, die an der Oberfläche fast geschmolzen ist, durch Druck fixiert.

10. Verfahren nach einem der Ansprüche 7 bis 9, dadurch gekennzeichnet, daß die Polyvinylidenfluoridoberfläche eine Temperatur zwischen 200 und 230 °C hat.

11. Verfahren nach einem der Ansprüche 7 bis 10, dadurch gekennzeichnet, daß die Schicht durch Bestreuen eines inerten Trägers mit Polyvinylidenfluoridpulver auf hergestellt wird und das Ganze auf eine Temperatur gebracht wird, die eine Grenzflächenbindung der Pulverteilchen erlaubt.

12. Verfahren nach Anspruch 11, dadurch gekennzeichnet, daß das Pulver fuhr eine Dauer von 30 Sekunden bis 5 Minuten auf eine Temperatur zwischen 180 und 200 °C gebracht wird.

13. Verfahren nach einem der Ansprüche 11 oder 12, dadurch gekennzeichnet, daß die Dicke der Schicht zwischen 0,4 und 1 mm liegt.
